# EUROPÄISCHE PATENTSCHRIFT

(11) **EP 0 608 794 B1**
(45) Veröffentlichungstag und Bekanntmachung des Hinweises auf die Patenterteilung: **09.10.1996**
(21) Anmeldenummer: 94100931.8
(22) Anmeldetag: 24.01.1994
(51) Int. Cl.: B60R 21/00, B60R 21/13

(54) **Mit einer Steuermutter versehener, elektrisch betätigter Komfortantrieb für Überrollbügel**
Electric servo drive for a roll bar incorporating a control nut
Entraînement électrique pour arceau de sécurité comportant un écrou de commande

(30) Priorität: 27.01.1993 DE 4302152
(43) Veröffentlichungstag der Anmeldung: 03.08.1994
(73) Patentinhaber: ITT Automotive Europe GmbH, D-60488 Frankfurt am Main (DE)
(72) Erfinder: Nass, Michael, D-51702 Bergneustadt (DE); Reuber, Gerhard, D-57489 Drolshagen (DE); Braun, Achim, D-51588 Nümbrecht (DE)

(56) Entgegenhaltungen:
- EP-A- 0 459 213
- DE-A- 3 927 265
- DE-C- 3 732 562
- DE-U- 9 200 457

## Beschreibung

Die Erfindung betrifft einen Komfortantrieb für Überrollbügel bei Kraftfahrzeugen. Derartige Überrollbügel dienen dazu, das Kraftfahrzeug bei einem Unfall im Dachbereich abzustützen. Im einfachsten Fall wird bei einem durch einen Crash ausgelösten elektrischen Impuls ein unter Federspannung stehender Bügel schnell ausgefahren, der sich dann im ausgefahrenen Zustand durch ein Rastgesperre abstützt.

Um Verletzungen durch das schnelle Ausfahren des Bügels zu vermeiden und um mit ganz oder halb herausgefahrenem Bügel fahren zu können, ohne daß unmittelbar ein Unfall bevorsteht wurde ein sogenannter Komfortantrieb entwickelt. Dieser Antrieb gestattet es, den Bügel mit langsamer Geschwindigkeit ein- bzw. auszufahren. Der Komfortantrieb muß es weiterhin ermöglichen, daß bei auftretendem Crashimpuls der Bügel schnell durch Federkraft auf seine volle Länge ausgefahren werden kann. Es muß weiterhin möglich sein, aus jeder Lage den Überrollbügel wieder einzufahren und damit die Antriebsfedern zu spannen.

Einzelheiten hierzu sind ausführlich in der DE-C-3732562 geschildert. Dabei ist in dieser Schrift im Zusammenhang mit Fig. 3 auch ein Komfortantrieb mit Elektromotor erläutert. Die weiter oben geschilderten Anforderungen an einen Komfortantrieb werden dabei mit Hilfe einer Steuerhülse und Hebelkonstruktionen erreicht. Derartige Hebel müssen sehr genau eingestellt sein und eine große Festigkeit besitzen, da sie andernfalls ihren Zweck nicht erfüllen.

Die Erfindung geht daher aus von einer Merkmalskombination, wie sie in dem Obergriff des Hauptanspruch aufgeführt ist. Aufgabe der vorliegenden Erfindung ist es, einen Komfortantrieb der eingangs genannten Art zu schaffen, der vergleichsweise einfach und preiswert aufgebaut ist und aufgrund seiner robusten Arbeitsweise recht zuverlässig arbeitet. Die Erfindung löst die Aufgabe durch die sich aus dem kennzeichnenden Teil des Anspruchs 1 ergebende Merkmalskombination. Die Erfindung besteht im Prinzip also darin, den elektromotorisch arbeitenden zweiten Antrieb gleichzeitig auch noch zur Betätigung der Sperre mit auszunutzen, was mit Hilfe einer durch ein Gewinde betätigten Steuermutter geschieht.

Eine besonders einfache Lösung ergibt sich in Weiterbildung der Erfindung, in dem sowohl die Steuermutter zum Ein- und Ausschalten der Sperre als auch die Fahrmutter zum Ein- und Ausfahren des Bügels durch die gleiche gemeinsame Spindelwelle angetrieben werden. Hierdurch wird durch die Drehbewegung einer einzigen Welle nicht nur der Überrollbügel, sondern auch die Sperre in beiden Richtungen betätigt.

Eine weitere Vereinfachung ergibt sich in Fortbildung der Erfindung durch die Merkmalskombination nach Anspruch 3. Dabei wird bei sich fortlaufend drehender Welle darauf verzichtet, von der sich weiterbewegenden Fahrmutter den Bügel zur Bewegungsbegrenzung abzukoppeln. Vielmehr wird die Fahrmutter gegen einen Anschlag gefahren, wobei dieser Anschlag so ausgestaltet sein muß, daß er die Drehbewegung der Spindel nicht behindert.

Eine sehr einfache Konstruktion hierzu beschreibt die Merkmalskombination nach Anspruch 4. Um nämlich bei fortlaufender Drehbewegung der Spindel die Fahrmutter anzuhalten, wird die Länge des Gewindes durch einen verminderten Abschnitt auf der Welle begrenzt. Die Fahrmutter fährt somit über den ersten Gewindeabschnitt und erreicht dann einen zweiten Abschnitt auf der Antriebswelle, in der sie nicht mehr mit einem Gewinde im Eingriff steht und somit stehenbleibt, obwohl die Spindel sich weiterdreht.

Um nun zu erreichen, daß bei keiner Bewegung mehr zulassender Endlage der Fahrmutter die Steuermutter gleichwohl weiterbewegt werden kann, um eine Sperre des Überrollbügels in seiner Endlage zu ermöglichen, wendet man vorteilhaft die Merkmalskombination nach Anspruch 5 an. Gemäß dieser Merkmalskombination ist der Steuermutter ein mit einem Gewinde versehener weiteren Abschnitt auf der Antriebswelle zugeordnet, wobei dieser Gewindeabschnitt hinreichend lang ausgestaltet sein muß, um eine Bewegung der Steuermutter auch dann noch zu ermöglichen, wenn die Fahrmutter bereits ihre Endstellung (Anschlag) erreicht hat. Ist dann von der Steuermutter durch die beschriebene weiterführende Bewegung die Sperre eingeschaltet, betätigt die Mutter mechanisch einen elektrischen Kontakt, der die Ausschaltung des Antriebs bewirken kann. Das bildet die Voraussetzung dafür, daß für eine Rückholbewegung des Bügels die Drehbewegung der Welle in entgegengesetzter Richtung wieder anläuft.

Einen besonders einfachen Aufbau für die Welle und die Herstellung der beiden Gewindeabschnitte ergibt sich durch die Merkmalskombination nach Anspruch 6. Danach können die beiden Gewindeabschnitte mit dem gleichen Werkzeug bzw. der gleichen Form hergestellt werden, da sie den gleichen Durchmesser und vorzugsweise auch das gleiche, selbsthaltende Gewinde besitzen.

Um nun in besonders einfacher Weise zu erreichen, daß für eine Rückwärtsbewegung die Fahrmutter wieder aus ihrer arretierten Endlage in das Gewinde eingefahren wird, empfiehlt sich in Weiterbildung der Erfindung die Merkmalskombination nach Anspruch 7. Danach drückt die auf einem hinreichend langen dritten Gewindeabschnitt sich bewegende Steuermutter bei ihrer Abwärtsbewegung die Fahrmutter in Richtung auf das Gewinde, bis das Gewinde greift und dann die Fahrmutter den Bügel entgegen der Kraft der Feder wieder einzieht. Die Abwärtsbewegung der Steuermutter bis zum Eingriff in die Fahrmutter wird in vorteilhafter Weise dazu ausgenutzt, die Sperre am Rückholbügel durch die Steuermutter wieder auszuschalten, so daß nachfolgend die Fahrmutter auch in der Lage ist, den Überrollbügel einzuholen.

Um in einfacher Weise zu erreichen, daß durch die Bewegung der Steuermutter, bei stillstehender Fahrmutter die Sperre ein- bzw. ausgeschaltet wird, wendet man in vorteilhafter Weise die Merkmalskombination nach Anspruch 8 an. Danach weist die Steuermutter eine Kurvenscheibe oder eine Steuernase mit Steuerkante auf, die den Abtaststift einer drehbar gelagerten Sperrklinke entgegen der Kraft einer Vorspannfeder in geeigneter Weise auslenkt bzw. einlenkt, so daß sie aus einer zugeordneten Rastverzahnung heraus bzw. in diese hereingeschwenkt wird.

Einen recht kompakten und montagefreundlichen Aufbau des kompletten Antriebs erhält man durch die Merkmalskombination nach Anspruch 9. Hierbei ist der gesamte Antrieb in einer aus Blechteilen gebildeten Cassette untergebracht, in der der Überrollbügel über geeignete Rollen leicht beweglich abgestützt ist. Eine derartige Cassette läßt sich vergleichsweise leicht in einer Rückenlehne verbauen.

In der Regel wird man den Antrieb mit einer an sich bekannten lösbaren Kupplung versehen, die im Crashfall den unter Federspannung stehenden Überrollbügel freigibt, so daß dieser in seine äußere Endlage fahren kann. Dabei überfährt er entweder durch seine Bewegungsrichtung in einfacher Weise die Sperre oder man sieht zusätzlich eine elektrisch betätigte Mechanik vor, die die Sperre vor dem Auslösen ausschwenkt. Um aber nun den Überrollbügel mit der Fahrmutter in einfacher Weise wieder verkuppeln zu können, empfiehlt sich in Weiterbildung die Merkmalskombination nach Anspruch 10. Danach sind Führungen in der Kupplung vorgesehen, die den Einkuppelvorgang erleichtern und die Bewegung der Kupplungsmechanik dementsprechend zentriert.

Ein Ausführungsbeispiel der Erfindung wird nachfolgend anhand der Zeichnung erläutert. Darin zeigt
- Fig. 1: in symbolischer Darstellung eine Vorderansicht des Ausführungsbeispiels, wobei nur die wesentlichen Komponenten dargestellt sind,
- Fig. 2: auszugsweise eine Seitenansicht des Ausführungsbeispiels nach Fig. 1 und
- Fig. 3: auszugsweise eine von oben gesehene Ansicht des Ausführungsbeispiels.

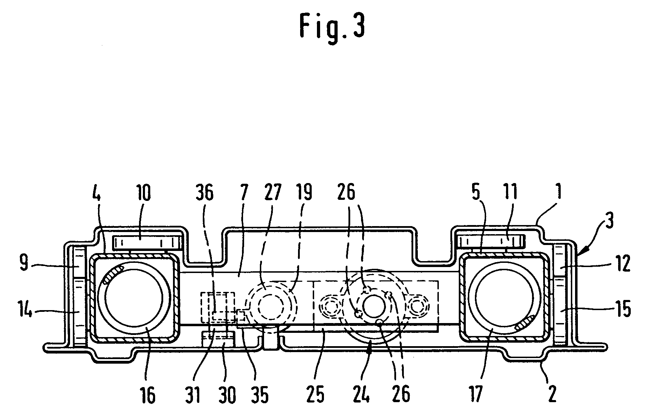

In Fig. 3 ist ein aus den Gehäuseteilen 1 und 2 zusammengesetztes Gehäuse 3 zu erkennen, in dem man von unten hereinblickend zwei im wesentlichen viereckige Säulen 4 und 5 erkennt, die die Schenkel des U-förmigen Bügels 6 bilden. Die beiden Säulen sind über eine Strebe 7 gegeneinander versteift, wobei die Strebe auch gleichzeitig den Angriffspunkt des Komfortantriebes an den Bügel 6 bildet.

Die Säulen 4,5 des Bügels 6 sind in drei über gegeneinander versetzt angeordnete Rollen in dem Gehäuse 3 abgestützt, von denen die Rollen 8 bis 15 in der Darstellung erkennbar sind. Hierdurch wird der Bügel 6 leicht gängig in dem Gehäuse 3 geführt.

Als Antrieb für den Bügel 6 dienen zwei innerhalb der hohlen Säulen 4,5 angeordnete kräftige Spiralfedern 16,17, die dem Bügel 6 eine geeignete Vorspannung für das schnelle Ausfahren im Crashfall geben. Es ist aber in Bezug auf die Erfindung nicht zwingend notwendig, daß die Antriebskraft des Bügels durch Federn erzeugt wird. Hier können auch andere Tansportmittel wie beispielswese ein pneumatischer Antrieb, ein explosiv wirkender Antrieb oder andere Einrichtungen vorgesehen sein.

Der unter Federspannung stehende Bügel 6 wird in seinem (hier nicht dargestellten) eingefahrenen Zustand durch die Welle 18 und eine auf dieser Welle sitzende Fahrmutter 19 gehalten. Die Welle 18 ist über ein geeignetes Antriebsmittel 20 wie beispielsweise einen Elektromotor oder eine Kupplung für eine biegsame Welle mit dem Gehäuse 3 in deren Längsrichtung unverschiebbar verankert. Sie ist weiterhin durch das Antriebsmittel 20 in beiden Drehrichtungen drehbar.

Die Welle 18 besitzt einen ersten Abschnitt 21, einen zweiten Abschnitt 22 und enen dritten Abschnitt 23. Während die beiden Abschnitte 21 und 23 den gleichen Durchmesser besitzen und das gleiche selbsthemmende Gewinde aufweisen, ist der zweite Abschnitt 22 im Durchmesser verjüngt und besitzt auch kein Gewinde. Von der Fahrmutter 19 geht ein fest mit dieser verbundener Haltearm 25 aus, an dem über Schrauben 26 eine Kupplung 24 befestigt ist, die mit ihrem entgegengesetzten Ende an dem Steg 7 befestigt ist. Damit ist im eingerasteten Zustand der Kupplung die Fahrmutter 19 fest mit dem Steg 7 und damit mit dem Überrollbügel 6 verbunden.

Im normalen Betriebszustand greift die Fahrmutter 19 mit ihrem Innengewinde an dem Außengewinde des ersten Abschnittes 21 an, wobei durch Drehbewegung der Welle 18 die Fahrmutter 19 auf- oder abbewegt und damit der Bügel aus- bzw. eingefahren wird.

Auf dem dritten Abschnitt 23 der Welle ist ebenfalls ein Außengewinde vorgesehen, auf welchem eine Steuermutter 27 parallel zur Fahrmutter 19 bei einer entsprechenden Drehbewegung der Welle 18 aufbsw. abfährt. Das untere Ende 28 der Steuermutter 27 besitzt gegenüber dem oberen Ende 29 der Fahrmutter 19 eine überschneidende Fläche, so daß die beiden Enden im Bedarfsfalle aufeinander einwirken können.

Der in der Zeichnung nicht dargestellte normale Komfortbetrieb zeichnet sich dadurch aus, daß die beiden Muttern 19,27 sich parallel zueinander und mit ihren Enden 28,29 im wesentlichen aneinander anliegend auf der Welle gemeinsam nach oben bzw. nach unten bewegen. Dabei wird, wie weiter oben schon erläutert, über die Kupplung 24 der Bügel 6 dementsprechend auf- oder abwärts bewegt. Durch Lösen der Kupplung 24 ist es jederzeit möglich, die rückhaltende Kraft der Fahrmutter unwirksam werden zu lassen, in dem der Bügel 6 sich von der Kupplung und damit den Muttern 19,27 unter der Wirkung der Federn 16,17 löst. Damit der Bügel im Crashfall aber nicht zurückgeschoben werden kann, ist mit dem Gehäuse 3 eine Sperrverzahnungsplatte 30 festverbunden, auf die der Steg 7 über eine Rastklinke 31 einwirkt. Die Rastklinke ist in dem Steg 7 über einen Drehbolzen 32 drehbar gelagert und wird über eine mittelbar am Steg 7 abgestützte Vorspannungsfeder federnd abgestützt. Die Richtung der Verzahnung ist dabei so gewählt, daß unter der Kraft der Federn 16,17 die Klinke 31 über die Verzahnung der Platte 30 wie über eine Ratsche gezogen wird. Bei einer dann plötzlich eintretenden entgegengesetzten Bewegung des Bügels 6 durch einen Aufprall bei einem Unfall kommt die Wirkung der Rastklinke 31 voll zum Tragen, da sie hier festhaltend in die Zähne der Platte 30 eingreift.

Für die Erfindung nun besonders bedeutsam ist ein anderer geforderter Bewegungsablauf. Es soll erreicht werden, daß beim langsamen Ausfahren des Bügels 6 durch die Wirkung der Fahrmutter 19 die Rastklinke außer Eingriff zu den Zähnen 34 der Rastplatte 30 gehalten wird. Dies wird dadurch erreicht, daß die Steuermutter 27 mit einer Kurvenscheibe 35 versehen ist, welche auf einen Steuerstift 36 der Rastklinke 31 einwirkt. Wenn nun die beiden Muttern 19,27 in Anlage der beiden Enden 28,29 mit dem Steg 7, dem Bügel 6 und damit auch der Rastklinke 31 gemeinsam auf- und abfahren, so ist die Lage und die Form der Kurvenscheibe 35 derart gewählt, daß sie über den Steuerstift 36 die Rastklinke 31 außer Eingriff zu den Zähnen 34 der Rastplatte 30 hält. Damit kann der Antrieb ungehindert von dem Gesperre den Bügel auf- und abfahren. Dabei ist es so, daß der Bügel 6 durch die Federn 16,17 unter Vorspannung gehalten ist, so daß die beiden Muttern 19,27 beim Betätigen des Bügels in beiden Bewegungsrichtungen gegen die Kraft der Federn 16,17 arbeiten. Auf diese Weise wird der Bügel 6 sozusagen durch den Komfortantrieb in der gewünschten Lage zurückgehalten. Zwar ist bei der normalen Fahrbewegung die Sperre ausgeschaltet. Unter der Vorspannung der Federn 16,17 folgt aber gleichwohl der Bügel der Bewegung der Muttern 19,27.

Da die Sperre im Normalzustand ausgeschaltet ist, muß aber sichergestellt werden, daß bei einem plötzlichen Unfall der Bügel nicht durch die Unfallkräfte beliebig tief eingestoßen und damit wirkungslos gemacht werden kann. Wie schon erwähnt, ist in Abwärtsrichtung der Bügel gegenüber den Muttern 19,27 von der Gegenkraft der Federn 16,17 abgesehen, ungehindert. Entsprechend große Unfallkräfte vorausgesetzt, läßt sich also der Bügel 6 und damit der Steg 7 sowie die Rastklinke 31 gegenüber der Steuermutter 27 nach unten verschieben. Hier tritt wiederum die Wirkung der Kurvenscheibe 35 ein, die so geformt ist, daß bei einer relativen Abwärtsbewegung des Stiftes 36 gegenüber der Scheibe 35 die Klinke 31 durch die Wirkung der Vorspannfeder 33 eingeschwenkt wird, so daß sie in die Verzahnung 34 eingreift und den Bügel in Abwärtsrichtung arretiert. Durch Herunterfahren der Muttern 19,27 läßt sich anschließend die Arretierung wieder aufheben und der normale Fahrbetrieb durchführen.

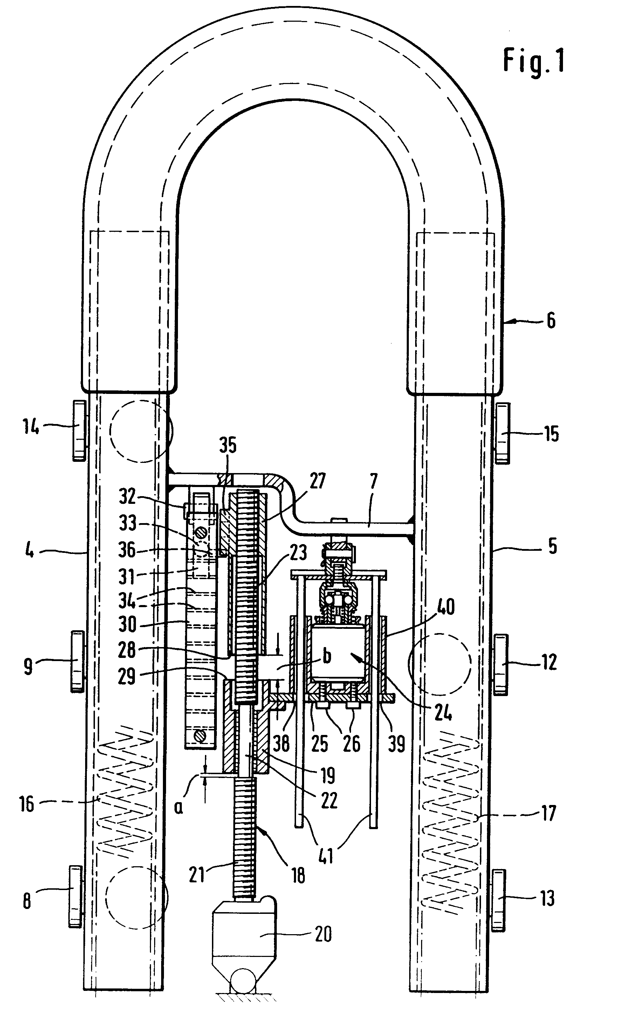

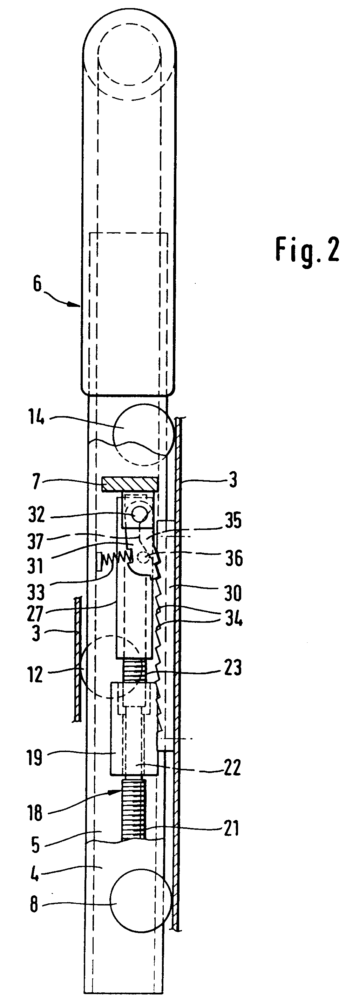

Ein anderer geforderter Bewegungsablauf des Komfortantriebs besteht darin, daß nach dem Ausfahren des Bügels 6 durch den Komfortantrieb in seine Endlage, dieser in eine Dauerraststellung gebracht werden soll. In diesem Zustand soll also der Bügel nicht erst durch Eindrücken verrasten, sondern sofort eingerastet den möglichen Kräften eines Unfalls Widerstand bieten. Hierzu sind zwei Bewegungsabschnitte vorgesehen. Zum einen muß der Bügel 6 in seine Endstellung gebracht werden. Zum zweiten muß dann noch bei in der Endstellung befindlichem Bügel die Sperre geschlossen werden. Erfindungsgemäß werden beide Bewegungsvorgänge durch den Antrieb der beiden Muttern 19,27 gemeinsamen Spindel 18 erreicht. Hierzu dient ein in die Welle 18 eingearbeiteter dritter Abschnitt 22 verjüngten Durchmessers, der kein Gewinde besitzt und somit auch keine Bewegungskraft auf die Mutter 19 ausübt. Die Abmessungen sind nun so gelegt, daß, nachdem die Mutter 19 das Gewinde des ersten Abschnittes 21 verläßt, der Bügel kurz danach gegen einen in der Zeichnung nicht dargestellten Anschlag läuft. Die kurze Strecke a, die die Mutter 19 nach Verlassen des Gewindes am ersten Abschnitt 21 bis zur Wirkung des Anschlags auf den Bügel 6 noch zurücklegt, erfolgt unter der haltenden Wirkung der Steuermutter 27, die mit ihrem Ende 28 die unter der Kraft der Federn 16,17 stehende Mutter 19 zurückhält. Sobald der Bügel 6 in seiner Bewegung nach oben fixiert ist, entfernt sich die Mutter 27 von der Mutter 19 unter der Wirkung der sich weiterdrehenden Welle 18. Damit läuft die Steuermutter 27 weiter in Richtung zu dem Steg 7. Dementsprechend gleitet die Kurvenscheibe 35 unter dem Steuerstift 36 hinweg, so daß sich entsprechend der Ausgestaltung der Steuerscheibe 35 die Rastklinke 31 gegenüber den Zähnen 34 der Verzahnungsplatte 30 absenkt und schließlich in die Verzahnung eingreift. Damit ist der Überrollbügel 6 in seiner herausgefahrenen Lage gegen eine Abwärtsbewegung gesperrt. Diese Lage ist in den Figuren 1 bis 3 dargestellt. Weiterhin werden in dieser Lage durch einen in der Zeichnung nicht gezeigten Schalter die Antriebsmittel 20 über die Steuermutter 27 abgeschaltet.

Bei einer nachfolgend gewünschten Einfahrbewegung des Bügels spielen sich folgende Vorgänge ab. Um die Bewegung einzuleiten, werden die Antriebsmittel 20 eingeschaltet, und zwar derart, daß sich die Spindel in entgegengesetzter Richtung zu der oben beschriebenen Drehbewegung dreht. Diese Bewegung übt noch keinen Einfluß auf die über dem zweiten Abschnitt 22 befindliche Fahrmutter 19 aus, da deren Innengewinde noch keinen Halt findet. Anders dagegen die Steuermutter 27, die sich abwärts bewegt und damit mit der Kurvenscheibe 35 unter dem Steuerstift 36 hindurch fährt und diesen anhebt. Damit ist die Sperre für den Bügel 6 zwar entriegelt, dieser verbleibt aber weiterhin unter der Kraft der Federn 16,17 in seiner durch einen entsprechenden Anschlag festgelegten Endlage. Bei der Abwärtsbewegung der Steuermutter 27 zum Lösen der Sperre über die Strecke b legt sich das untere Ende 28 der Steuermutter 27 an das obere Ende 29 der Fahrmutter 19 an und drückt diese entgegen der Kraft der Federn 16,17 so lange nach unten, bis deren Innengewinde an dem Außengewinde des ersten Abschnitts 21 Halt findet und damit zu der die Federn 16,17 zusammenpressenden Kraft beitragen kann. Anschließend fahren beide Muttern abwärts und wunschweise im Komfortantrieb auch wieder aufwärts. Dabei sind, wie weiter oben schon erläutert, die Abstände so bestimmt, daß in diesem Zustand die Lage der Kurvenscheibe 35 gegenüber den Steuerstift 36 die Rastklinke außer Eingriff hält. Dies ist in etwa der Scheibenbereich 37.

Wie weiter oben schon erwähnt, kann unter bestimmten Bedingungen der Überrollbügel 6 gegenüber der Fahrmutter 19 und damit dem Haltearm 25 eine Relativbewegung ausführen. Dies ist dann der Fall, wenn die Kupplung 24 gelöst wird. Um das Einkuppeln zu erleichtern, sind in der Halteplatte 25 Öffnungen 38,39 vorgesehen, die in verlängerte Bohrungen eines Haltetopfes 40 übergehen. In diesen Öffnungen 38,39 werden Führungsstäbe 41 geführt, welche eine zentrierende Zusammenführung der beiden Kupplungsteile ermöglichen, um die Kupplung sicher wieder einrasten zu können. Der Aufbau der Kupplung selbst ist nicht Gegenstand der vorliegenden Erfindung. Hier kann beispielsweise eine Konstruktion Verwendung finden, wie sie in der DE-C-3732562 oder der DE-A-3927265 ausführlich erläutert wird.

## Patentansprüche

1. Antrieb für einen Überrollbügel für Kraftfahrzeuge mit einer ersten Antriebseinheit (16,17,), die im Crashfall aufgrund eines den Crash anzeigenden Steuersignals den Überrollbügel (6) schnell ausfährt, mit einer zweiten Antriebseinheit (18,19,20,25), die über eine lösbare Kupplung (24) mit dem Überrollbügel (6) gekoppelt ist und gegen die Kraft der ersten Antriebseinheit (16,17) den Überrollbügel (6) einzieht bzw. ausfährt, mit einer steuerbaren Sperre (30 bis 36) die im Crashfall eingeschaltet ist und das Einschieben des Überrollbügels (6) gegen die Kraft des ersten Antriebs (16,17) verhindert und einer die Sperre (30 bis 36) betätigenden Steuereinrichtung (27, 35 - 37) die während der Betätigung des zweiten Antriebs (18 bis 21) die Sperre außer Eingriff bringt und während eines gleichzeitig auftretenden Crashfalls die Sperre (30 bis 34) wieder einschaltet, dadurch **gekennzeichnet**, daß die Steuerung durch eine mit dem zweiten Antrieb (18 bis 21) gekoppelten Steuermutter (27) gebildet ist, die nach Erreichen der herausgefahrenen Endlage des zweiten Antriebs (18 bis 21) durch eine mechanische Verschiebung die Sperre (30 bis 34) einschaltet und vor dem nachfolgenden Einfahren des Überrollbügels (6) aus seiner äußeren Endlage durch eine entgegengesetzte mechanische Verschiebung die Sperre (30 bis 34) wieder ausschaltet.

2. Antrieb nach Anspruch 1, dadurch **gekennzeichnet**, daß die Steuermutter (27) ebenso wie der Überrollbügel (6) durch die Drehbewegung einer gemeinsamen Spindelwelle (18) angetrieben wird, wobei durch die Drehrichtung der Welle (18) die Bewegung des Überrollbügels (6) und der Steuermutter (27) festgelegt ist.

3. Antrieb nach Anspruch 1 oder 2, dadurch **gekennzeichnet**, daß die Endlage des zweiten Antriebs durch einen Bewegungsbegrenzer (22) für eine Fahrmutter (19) festgelegt ist, die durch die Spindel (18) angetrieben wird.

4. Antrieb nach Anspruch 3, dadurch **gekennzeichnet**, daß auf der Spindelwelle (18) mindestens zwei Abschnitte (21,22) unterschiedlichen Durchmessers vorgesehen sind, wobei ein erster Abschnitt (21) stärkeren Durchmessers in einen zweiten Abschnitt (22) schwächeren Durchmessers übergeht, daß die Fahrmutter (19) einem Gewinde auf dem ersten Abschnitt (21) zugeordnet ist und der Bewegungsbegrenzer (22) der Fahrmutter durch den Übergang vom ersten Abschnitt (21) auf den zweiten Abschnitt (22) auf der Welle gebildet ist.

5. Antrieb nach Anspruch 4, dadurch **gekennzeichnet**, daß ein mit einem Gewinde versehener dritter Abschnitt (23) auf der Welle (18) der Steuermutter (27) zugeordnet ist und daß die mechanische Bewegung der Steuermutter (27) nach Erreichen der Endlage der Fahrmutter (19) dadurch erzielt wird, daß die Spindel (18) weiterdreht und die Spindelbewegung erst nach Erreichen der die Einschaltung der Sperre (30 bis 34) durch die Steuermutter (27) ermöglichenden Lage beendet wird.

6. Antrieb nach Anspruch 5, dadurch **gekennzeichnet**, daß der erste Abschnitt (21) und der dritte Abschnitt (23) den gleichen Durchmesser haben.

7. Antrieb nach einem der Ansprüche 4 - 6, dadurch **gekennzeichnet**, daß die Steuermutter (27) beim Hereinfahren aus ihrer Endlage die Fahrmutter (19) auf den ersten Abschnitt (21) schiebt, so daß diese vom Gewinde des ersten Abschnitts ergriffen wird und den Überrollbügel (6) einfährt.

8. Antrieb nach einem der vorangegangenen Ansprüche, dadurch **gekennzeichnet**, daß die Steuermutter (27) mit einer Kurvenscheibe (35) und die Sperre (30 bis 34) mit einem die Kurvenscheibe abtastenden Abtaststift (36) versehen ist.

9. Antrieb nach einem der vorangegangenen Ansprüche, dadurch **gekennzeichnet**, daß er in einem Blechgehäuse (3) eingebaut ist, wobei der Überrollbügel (6) an den Gehäusewänden vorzugsweise in zwei senkrecht zueinanderstehenden Richtungen über Rollen (8 bis 15) verschiebbar abgestützt ist.

10. Antrieb nach einem der vorangegangenen Ansprüche, dadurch **gekennzeichnet**, daß die lösbare Kupplung mit Führungen (38 bis 40) versehen ist, die die Bewegung der Kupplung (24) beim Einkuppeln zentrieren.

## Claims

1. Drive for a roll bar of automotive vehicles including a first drive unit (16, 17) which quickly extends the roll bar (6) in a crash in response to a control signal indicative of the crash, a second drive unit (18, 19, 20, 25) which is coupled to the roll bar (6) by way of a disengageable coupling (24) and retracts or extends the roll bar (6) in opposition to the force of the first drive unit (16, 17), a controllable locking mechanism (30 to 36) which is activated during a crash and prevents the retracting movement of the roll bar (6) in opposition to the force of the first drive (16, 17), and a controlling device (27, 35 to 37) operating the locking mechanism (30 to 36), which disengages the locking mechanism during operation of the second drive (18 to 21) and reactivates the locking mechanism (30 to 34) in the event of a simultaneously occurring crash,
**characterized** in that the control means is a control nut (27) coupled to the second drive (18 to 21) which, after the extended final operative position of the second drive (18 to 21) has been reached, activates the locking mechanism (30 to 34) by mechanical displacement and deactivates the locking mechanism (30 to 34) again by an opposed mechanical displacement prior to the subsequent retracting movement of the roll bar (6) from its extended final operative position.

2. Drive as claimed in claim 1,
**characterized** in that the control nut (27) as well as the roll bar (6) are driven by the rotational movement of a joint spindle shaft (18), the movement of the roll bar (6) and the control nut (27) being determined by the direction of rotation of the shaft (18).

3. Drive as claimed in claim 1 or claim 2,
**characterized** in that the final operative position of the second drive is determined by a motion limiter (22) for a moving nut (19) driven by the spindle (18).

4. Drive as claimed in claim 3,
**characterized** in that the spindle shaft (18) includes at least two portions (21, 22) of different diameters, a first portion (21) of large diameter passing over into a second portion (22) of small diameter, in that the moving nut (19) is associated with a thread on the first portion (21) and the motion limiter (22) of the moving nut is the passage from the first portion (21) to the second portion (22) on the shaft.

5. Drive as claimed in claim 4,
**characterized** in that a threaded third portion (23) on the shaft (18) is associated with the control nut (27), and in that the mechanical movement of the control nut (27), on attainment of the final operative position of the moving nut (19), is achieved because the spindle (18) continues to rotate and the spindle movement is not terminated until the position is reached which permits activation of the locking mechanism (30 to 34) by the control nut (27).

6. Drive as claimed in claim 5,
**characterized** in that the first portion (21) and the third portion (23) have the same diameter.

7. Drive as claimed in any one of claims 4 to 6,
**characterized** in that, during inward movement from its final operative position, the control nut (27) pushes the moving nut (19) onto the first portion (21) so that the moving nut is engaged by the thread of the first portion and retracts the roll bar (6).

8. Drive as claimed in any one of the preceding claims,
**characterized** in that the control nut (27) includes a curved disc (35), and the locking mechanism (30 to 34) includes a sensing pin (36) sensing the curved disc.

9. Drive as claimed in any one of the preceding claims,
**characterized** in that the drive is accommodated in a sheet-metal housing (3), and the roll bar (6) is supported on the housing walls so as to be movable in two directions perpendicular to each other by way of rollers (8 to 15).

10. Drive as claimed in any one of the preceding claims,
**characterized** in that the disengageable coupling has guides (38 to 40) which centre the movement of the coupling (24) during coupling engagement.

## Revendications

1. Dispositif d'entraînement pour arceau de sécurité pour véhicule automobile, comprenant une première unité d'entraînement (16, 17), qui déploie rapidement l'arceau de sécurité (6) en cas de collision, sous l'effet d'un signal de commande indiquant la collision, une seconde unité d'entraînement (18, 19, 20, 25), qui est accouplée à l'arceau de sécurité ( 6) par l'intermédiaire d'un accouplement (24) agencé de façon à pouvoir être libéré et qui rétracte ou déploie l'arceau de sécurité (6) à l'encontre de la force de la première unité d'entraînement (16, 17), des moyens d'arrêt (30 à 36) agencés de façon à pouvoir être commandés, qui sont mis en service en cas de collision et empêchent l'enfoncement de l'arceau de sécurité (6) à l'encontre de la force de la première unité d'entraînement (16, 17) et un dispositif de commande (27, 35 - 37) qui manoeuvrent les moyens d'arrêt (30 à 36) et qui, pendant l'actionnement de la seconde unité d'entraînement (18 à 21), met **hors** de prise les moyens d'arrêt et, pendant un cas de collision ayant lieu en même temps, remet en prise les moyens d'arrêt (30 à 34), caractérisé en ce que le dispositif de commande est formé d'un écrou de commande (27) qui est accouplé à la seconde unité d'entraînement (18 à 21) et qui, une fois atteinte la position extrême déployée de la seconde unité d'entraînement (18 à 21), met en service les moyens d'arrêt (30 à 34) à l'aide d'un déplacement mécanique et, avant la rétraction suivante de l'arceau de sécurité (6) à partir de sa position extrême extérieure, remet hors service les moyens d'arrêt (30 à 34) à l'aide d'un déplacement mécanique de sens opposé.

2. Dispositif d'entraînement selon la revendication 1, caractérisé en ce que l'écrou de commande (27) aussi bien que l'arceau de sécurité (6) sont entraînés par le mouvement de rotation d'un arbre commun (18), les déplacements de l'arceau de sécurité (6) et de l'écrou de commande (27) étant déterminés par le sens de rotation de l'arbre (18).

3. Dispositif d'entraînement selon la revendication 1 ou 2, caractérisé en ce que la position extrême de la seconde unité d'entraînement est déterminée par des moyens (22) de limitation de déplacement d'un écrou de translation (19) qui est entraîné par l'arbre (18).

4. Dispositif d'entraînement selon la revendication 3, caractérisé en ce qu'il est prévu au moins deux sections (21, 22) de diamètres différents sur l'arbre (18), une première section (21) de plus grand diamètre se raccordant à une deuxième section (22) de plus petit diamètre, et en ce que l'écrou de translation (19) est associé à un filetage situé sur la première section (21) et les moyens (22) de limitation de déplacement de l'écrou de translation sont formés par la transition de la première section (21) de l'arbre à sa deuxième section (22).

5. Dispositif d'entraînement selon la revendication 4, caractérisé en ce qu'une troisième section (23) prévue sur l'arbre (18) et pourvue d'un filetage est associée à l'écrou de commande (27) et en ce que le déplacement mécanique de l'écrou de commande (27) une fois atteinte la position extrême de l'écrou de translation (19) est obtenue par le fait que l'arbre (18) continue de tourner et le mouvement de l'arbre n'est arrêté qu'une fois atteinte la position permettant la mise en service des moyens d'arrêt (30 à 34) à l'aide de l'écrou de commande (27).

6. Dispositif d'entraînement selon la revendication 5, caractérisé en ce que la première section (21) et la troisième section (23) ont le même diamètre.

7. Dispositif d'entraînement selon l'une des revendications 4 - 6, caractérisé en ce que, lorsque l'écrou de commande (27) est enfoncé à partir de sa position extrême, il pousse l'écrou de translation (19) sur la première section (21) de façon que cet écrou de translation soit saisi par le filetage de la première section et rétracte l'arceau de sécurité (6).

8. Dispositif d'entraînement selon l'une des revendications précédentes, caractérisé en ce que l'écrou de commande (27) est pourvu d'un plateau de came (35) et les moyens d'arrêt (30 à 34) sont pourvus d'un doigt palpeur (36) qui suit le plateau de came.

9. Dispositif d'entraînement selon l'une des revendications précédentes, caractérisé en ce qu'il est monté dans un boîtier en tôle (3), l'arceau de sécurité (6) prenant de préférence appui d'une manière coulissante sur les parois de boîtier suivant deux directions perpendiculaires entre elles, au moyen de galets (8 à 15).

10. Dispositif d'entraînement selon l'une des revendications précédentes, caractérisé en ce que l'accouplement libérable est pourvu de moyens de guidage (38 à 40) qui centrent le mouvement de l'accouplement (24) lors de l'opération d'accouplement.
